## Europäisches Patentamt

(19) **European Patent Office**

**Office européen des brevets**

(11) Numéro de publication: **0 174 229**
**B1**

(12) **FASCICULE DE BREVET EUROPÉEN**

(45) Date de publication du fascicule du brevet:
25.11.87

(21) Numéro de dépôt: **85401561.7**

(22) Date de dépôt: **31.07.85**

(51) Int. Cl.⁴: **B 60 T 13/24**

(54) Clé de butée pour plongeur de valve d'un servomoteur d'assistance au freinage, et servomoteur équipé d'une telle clé.

(30) Priorité: **16.08.84  FR 8412864**

(43) Date de publication de la demande:
**12.03.86 Bulletin 86/11**

(45) Mention de la délivrance du brevet:
**25.11.87 Bulletin 87/48**

(84) Etats contractants désignés:
**DE GB IT**

(56) Documents cité:
**DE-A-3 031 224**
**DE-A-3 318 065**
**FR-A-1 242 036**
**FR-A-1 389 743**
**FR-A-2 121 898**
**GB-A-2 140 518**

(73) Titulaire: **BENDIX France, 126, rue de Stalingrad, F-93700 Drancy (FR)**

(72) Inventeur: **Gautier, Jean- Pierre, 46 ter, Avenue Louis- Blanc, F-93600 Aulnay- sous- Bois (FR)**

(74) Mandataire: **Le Moenner, Gabriel, SERVICE BREVETS BENDIX 44, Rue François 1er, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention concerne les clés de butée pour plongeur de valve de distribution d'un servomoteur d'assistance au freinage, typiquement du type à dépression, disposée dans une partie de moyeu d'un piston d'assistance du servomoteur la clé comportant une partie centrale à extrémité profilée sensiblement en forme de V, destinée à être engagée dans une ouverture radiale de la partie de moyeu pour coopérer en engagement avec le plongeur, et, formées d'une seule pièce avec la partie centrale, une paire de bras sensiblement en forme d'arc de cercle, destinés à coopérer en engagement avec la périphérie extérieure de la partie de moyeu.

Une clé de butée de ce type est décrite dans le document US-A-3688647, qui corresfpnd au préambule de la revendication 1. La clé de ce document est réalisée par découpe et conformation d'une plaque métallique et est engagée dans une ouverture radiale de la partie de moyeu du piston d'assistance du servomoteur où elle est maintenue, d'une part par une patte légèrement rabattue angulairement de la partie centrale, et par des ergots formes sur les bras et venant se loger dans des évidements correspondants formés sur la périphérie extérieure de la partie de moyeu. Une telle clé "pleine" occulte la majeure partie de l'ouverture radiale dans laquelle elle est montée, ce qui impose de prévoir, dans la partie de moyau, une seconde ouverture radiale établissant la communication entre la valve de distribution et la chambre arrière du servomoteur. De plus, du fait de la réalisation par estampage d'une tôle métallique, les bras de la clé présentent une faible élasticité propre, interdisant de prolonger ces bras au-delà da la partie centrale pour qu'ils sa rapprochent l'un de l'autre et ne leur permettant donc pas de garantir, à eux seuls, le maintien de la clé dans le moyeu, même en prévoyant les ergots précités. Le document GB-A-2095778 décrit une clé identique, mais dont les bras sont prolongés par des tampons de caoutchouc surmoulés convergeant l'un vers l'autre au-delà de la partie centrale de façon à entourer plus complètement la périphérie du moyeu et assurer ainsi une meilleure rétention de la clé dans le moyeu. Outre que cet agencement obère considérablement les coûts de fabrication de la clé, la fiabilité de ce type de montage paraît quelque peu discutable compte tenu des efforts importants auxquels peut être soumise en fonctionnement la clé.

La présente invention a pour objet de proposer une clé de butée du type sus-mentionné de construction particulièrement simple, de faible coût de fabrication, occupant un volume minimum mais permettant de garantir un parfait maintien dans le moyeu.

Pour ce faire, selon une caractéristique de l'invention, la clé est réalisée en fil métallique, la partie centrale comprenant deux brins latéraux de montage sensiblement parallèles dont les premières extrémités sont reliées entre elles par un brin central sensiblement en forme de V et ayant chacun sa seconde extrémité prolongée par un brin extérieur incurvé formant le bras correspondant.

La présente invantion a pour autre objet de proposer un servomoteur d'assistance au freinage agencé pour être équipé d'une telle clé.

Ainsi, selon une autre caractéristique de l'invention, un servomoteur d'assistance au freinage, du type comprenant, dans un moyeu de piston d'assistance, un plongeur de valve de distribution couplé à une tige d'entrée du servomoteur et une clé telle que précédemment définie engagée dans une ouverture radiale du moyeu de piston contre une première paroi axiale de cette ouverture, est caractérisé en ce que l'ouverture radiale comporte latéralement, au moins au voisinage du plongeur, des rainures radiales parallèles en vis-à-vis délimitées axialement, d'un côté par ladite première paroi axiale de l'ouverture et recevant sensiblement sans jeu les brins latéraux de montage de la clé.

D'autres caractéristiques et avantages de la présente invention ressortiront de la description suivante de modes de réalisation donnés à titre illustratif mais nullement limitatif, faite en relation avec les dessins annexés, sur lesquels:

- la Fig. 1 est une vue partielle en coupe longitudinale d'un moyeu de servomoteur d'assistance équippé d'une clé de butée selon l'invention;

- la Fig. 2 est une vue en plan d'un premier mode de réalisation d'une clé selon l'invention; et

- les Fig. 3a et 3b sont des demi-coupes transversales suivant le plan de coupe III-III de la Fig. 1 et montrant respectivement l'aménagement de la clé selon le mode de réalisation de la Fig. 2 et selon une variante de ce mode de réalisation.

Dans la description détaillée qui va suivre et sur les dessins les éléments identiques ou analogues sont identifiés par les mêmes chiffres de référence, éventuellement indicés.

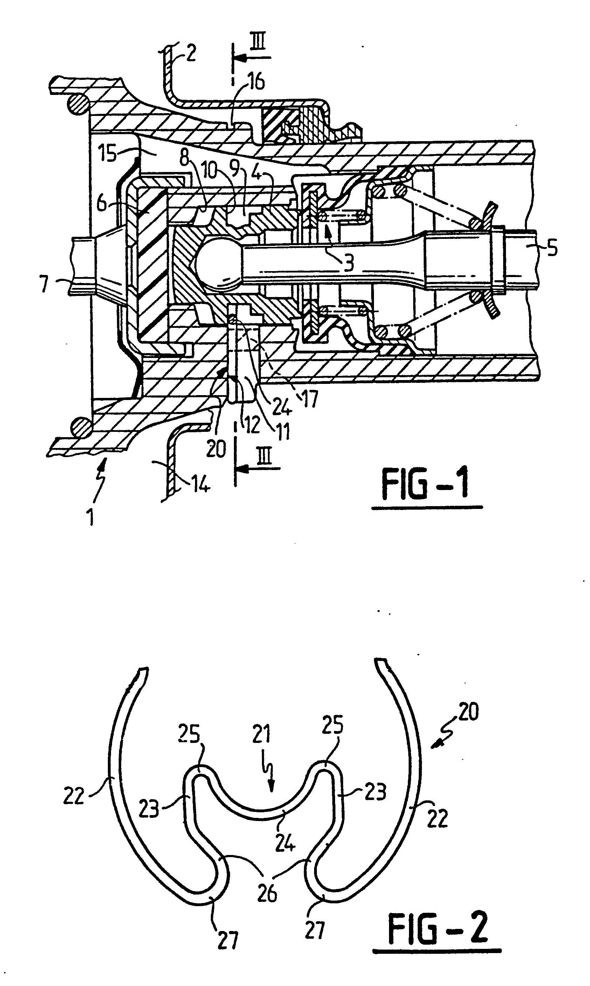

On reconnaît sur la Fig. 1 la partie centrale du moyeu (1) d'un piston d'assistance d'un servomoteur d'assistance, dont on reconnaît une portion de la coquille arrière de boitier (2), du type général décrit dans le document US-A-3688647 sus-mentionné, dont le contenu est supposé intégré ici pour référence. Dans la partie de moyeu (1) est disposé un moyen de valve de distribution (3) associé à un plongeur de valve (4) solidaire de la tige d'entrée (5) du servomoteur et susceptible de coopérer avec un disque de réaction (6) monté dans une coupelle d'extrémite de la tige de sortie (7) du servomoteur destinée typiquement à être couplée à un piston d'un maître-cylindre associé au servomoteur d'assistance. De façon classique, le plongeur (4) coulisse axialement dans un alésage central (8) du moyeu (1) et comporte une gorge périphérique (9) définissant une face d'appui annulaire (10) dirigée vers la tige d'entrée (5) destinée à coopérer avac une clé de butée montée dans une ouverture radiale (11) du moyeu (1).

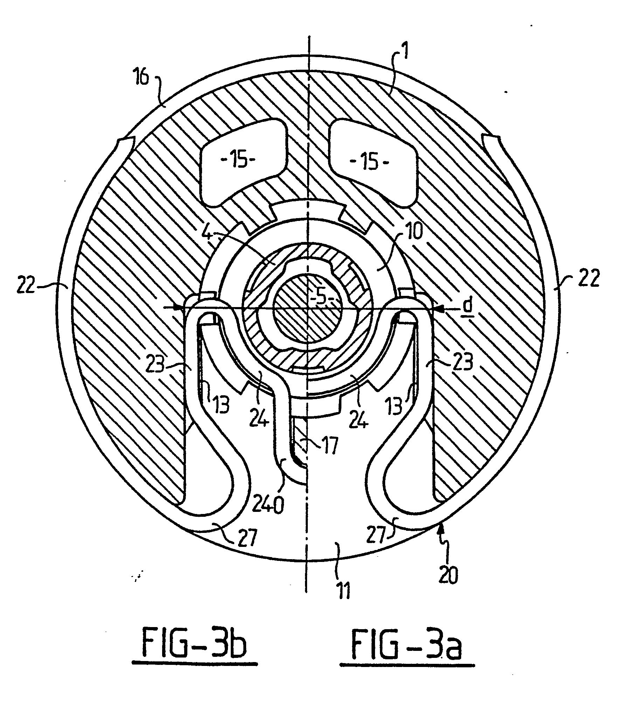

Conformément à l'invention, comme on le voit bien sur les Fig. 2 et 3, la clé de butée, désignée dans son ensemble par la référence 20, est réalisée par mise en forme d'un fil d'acier à ressort de diamètre compris entre 1,3 et 2 mm, typiquement de 1,5 mm. La clé (20) comporte une partie centrale (21) destinée à être engagée dans l'ouverture radiale (11) du moyeu (1), et deux brins extérieurs (22). L'ensemble de la clé est symétrique par rapport à un axe médian, la partie centrale (21) at les bras (22) étant sensiblement coplanaires. La partie centrale (21) comprend deux brins lateraux parallèles (23) reliés entre eux par un brin central (24) sensiblement en forme de V arrondi en demi-cercle de rayon légèrement supérieur au rayon du fond de la gorge annulaire (9) du plongeur (4) ou en forme de V anguleux. Le brin central (24) est relié aux extrémités adjacentes des brins latéraux (23) par des pliures en épingles à cheveux (25) sensiblement alignées avec le centre du cercle du brin central (24). Les autres extrémités (26) des brins latéraux (23) convergent l'une vers l'autre et sont prolongées vers l'extérieur, via des pliures en épingle à chevaux (27), par las brins formant bras (22) ayant chacun sensiblement la forme d'un arc de cercle de rayon correspondant sensiblement au diamètre extérieur, au niveau de l'ouverture (11), du moyeu (1) du servomoteur. Les extrémités libres des bras (22) s'étendent au-delà de la partie centrale (21) de la direction opposée aux pliures (27) et convergent l'une vers l'autre, les bouts des extrémités des bras (22) étant légèrement repliés vers l'extérieur pour faciliter l'écartement élastique des bras (22) lors de la mise en place de la clé dans le moyeu.

Si l'on se réfère maintenant aux Fig. 1 et 3, l'ouverture radiale (11) du moyeu (1) est définie axialement du côté de la tige de sortie (7), par une face plane transversale (12) définissant le plan de référence au repos pour la face d'appui annulaire (10) du plongeur (4) via la clé (20). L'ouverture (11) comporte latéralement, au moins au voisinage du plongeur (4), deux rainures radiales parallèles en vis-à-vis (13) délimitées axialement, d'un côté par la paroi axiale (12) de l'ouverture (11) et d'extension axiale déterminée de façon à recevoir sensiblement sans jeu les brins latéraux (23), comme on le voit bien sur la Fig. 3. La distance transversale (d) entre les fonds en regard de ces rainures (13) est sensiblement égale à la distance entre les bords parallèles extérieurs des brins latéraux (23) de la partie centrale (21) de la clé (20). Conformément à un aspect de l'invention, l'ouverture (11) forme un passage de communication de fluide entre la valve (3) et la chambre arrière (14) du servomoteur, des passages de fluide axiaux (15), formés dans l'épaisseur du moyeu (1), établissant la communication entre la valve (3) et la chambre avant du servomoteur (non représentée).

Avec un tel agencement, au montage, la clé (20) est présentée en face de l'ouverture radiale (11), puis introduite radialement dans cette dernière pour amener las brins latéraux de montage (23) dans les rainures parallèles (13), ce mouvement d'insertion s'effectuant avec déformation élastique vers l'extérieur des bras (22) jusqu'à ce que le bord intérieur de ceux-ci viennent an appui contre la surface exterieure du moyeu (1) dans une configuration finale de montage où les bras (22) entourent une majeure partie du moyeu (1) en empêchant ainsi tout echappement accidentel de la clé hors de l'ouverture (11). Dans cette configuration de montage, le brin central (24), les brins latéraux (23), ainsi que les pliures (27) sont plaqués contre la paroi axiale de référence (12) de l'ouverture (11), l'effort exercé au retour, par le plongeur (4) sur la clé (20) étant repris par les brins latéraux (23) maintenus dans leurs rainures (13), le couple exercé ainsi sur la partie centrale (21) de la clé étant repris en outre par les pliures (27) plaquées contre la paroi axiale (12). Pour assurer un positionnemant précis des bras (22) sur le moyeu (1) et pour ne pas augmenter sensiblement le diamètre extérieur de celui-ci du fait des bras (22), ceux-ci peuvent être reçus dans une gorge périphérique (16) du moyeu.

Dans le cas, où, pour garantir une réponse plus rapide de la valve (3) et pour favoriser le passage d'un débit important de fluide de la chambre arrière (14) vers la valve (3), on peut prévoir, pour l'ouverture radiale (11), une portion centrale (entre les rainures (13)), d'extension axiale importante. Toutefois, dans ce cas, il risque de se produire des problèmes de tenue mécanique, en fonctionnement, du moyeu (1) au niveau de l'ouverture (11), compte tenu notamment de la présence des passages (15). Aussi, selon un aspect de l'invention, on peut prévoir dans ce cas, une partie en saillie (17) s'étendant axialement à partir de la paroi axiale de l'ouverture (11) opposée à la paroi axiale (12) et s'étendant jusqu'au voisinage de cette première paroi axiale (12). L'agencement de clé selon la présente invention permet en effet, comme représenté sur la Fig. 3b, d'accomoder cette partie en saillie (17) en prévoyant pour le brin central (24) une configuration en forme de Y dont la jambe est formée par une pliure en U allongé (240) interrompant centralement le V du brin central (24) et venant s'engager autour de la partie en saillie (17) profilée extérieurement en conséquence. De préférence, la partie en saillie (17) traverse entièrement axialement l'ouverture (11) en reliant les deux parois axiales en regard de cette dernière, la partie en saillie (17) étant réalisée d'une seule pièce par moulage avec le corps de moyeu (1).

## Revendications

1. Clé de butée pour plongeur (4) de valve de distribution (3) d'un servomoteur d'assistance au freinage disposée dans une partie de moyeu (1) d'un piston d'assistance du servomoteur, la clé (20) comportant une partie centrale (21) à extrémité profilée sensiblement en forme de V, destinée à être engagée dans une ouverture radiale (11) de la partie de moyeu pour coopérer en engagement avec le plongeur (4), et, formés d'une seule pièce avec la partie centrale (21), une paire de bras (22) sensiblement en forme d'arc de cercle destinés à coopérer en engagement avec la périphérie extérieure de la partie de moyeu, caractérisée en ce que la clé (20) est réalisée en fil métallique, la partie centrale (21) comprenant deux brins latéraux de montage sensiblement parallèles (23) dont les premières extrémités sont reliées entre elles par un brin central (24) sensiblement en forme de V et ayant chacun sa seconde extrémité (26) prolongée par un brin extérieur incurvé formant le bras correspondant (22).

2. Clé selon la revendication 1, caractérisée en ce que le brin central (24) est relié à chacune des premières extrémités des brins latéraux (23) par une pliure en épingle à cheveux (25).

3. Clé selon la revendication 1 ou la revendication 2, caractérisée en ce que les brins latéraux (23) ont leur seconde extrémité (26) convergeant l'une vers l'autre.

4. Clé selon l'une des revendications 1 à 3, caractérisée en ce que chaque brin extérieur formant bras (22) se prolonge au-delà de la partie centrale (21), les extrémités libres de ces brins formant bras convergeant l'une vers l'autre.

5. Clé selon l'une des revendications 1 à 4 caractérisée en ce que le brin central (24) a une configuration en forme de Y dont la jambe est formée par une pliure en U allongé (240).

6. Clé selon l'une des revendications 1 à 5, caractérisée en ce qu'elle est réalisée en fil d'acier de ressort d'un diamètre compris entre 1,3 at 2 mm.

7. Servomoteur d'assistance au freinage, comprenant, dans un moyeu de piston d'assistance (1), uun plongeur (4) de valve de distribution (3) couplé à une tige d'entrée (5) du servomoteur et une clé de butée (20) pour le plongeur selon l'une des revendications précédentes, engagée dans une ouverture radiale (11) du moyeu de piston contre une première paroi axiale (12) de cette ouverture, caractérisé en ce que l'ouverture radiale (11) comporte latéralement, au moins au voisinage du plongeur (4), des rainures radiales parallèles en vis-à-vis (13) délimitées axialement, d'un côté, par ladite paroi axiale (12) de l'ouverture (11) et recevant sensiblement sans jeu les brins latéraux de montage (23) de la clé (20).

8. Servomoteur selon la revendication 5 et la revendication 7, caractérisé en ce que l'ouverture radiale (11) comporte une portion centrale d'extension axiale supérieure à l'extension axiale des rainures (13) et délimitée par une seconde paroi axiale, et une partie en saillie (17) s'étendant axialement à partir de cette seconde paroi axiale jusqu'au voisinage de la première paroi axiale (12).

9. Servomoteur selon la revendication 8, caractérisé en ce que la partie en saillie (17) relie les deux parois axiales de l'ouverture (11) et est formée d'une seule pièce avec le moyeu (1).

10. Servomoteur selon l'une des revendications 7 à 9, caractérisé en ce que la distance transversale (d) entre les fonds en regard des rainures (13) est sensiblement égale à la distance entre les bords parallèles extérieurs des brins latéraux (23).

11. Servomoteur selon l'une des revendications 7 à 10, caractérisé en ce que le moyeu (1) comporte une gorge périphérique (16) recevant les brins extérieurs formant bras (22) de la clé (20).


**Patentansprüche**

1. Anschlagkörper für den Plunger (4) eines Verteilerventiles (3) eines Bremsservomotors, der in einem Nabenteil (1) eines Servokolbens des Servomotors angeordnet ist, wobei der Anschlagkörper (20) einen im wesentlichen V-förmigen profilierten zentralen Endabschnitt (21) aufweist, der in eine radiale Öffnung (11) des Nabenteils greift, um mit dem Plunger (4) zusammenzuwirken, und zwei im wesentlichen halbkreisförmigen Armen (22), die einstückig mit dem zentralen Abschnitt (21) ausgebildet sind und mit dem Außenumfang des Nabenteils zusammenwirken, dadurch gekennzeichnet, daß der Anschlagkörper (20) aus einem metallischen Draht besteht, wobei der zentrale Abschnitt (21) zwei im wesentlichen parallele seitliche Montagestücke (23) aufweist, deren erste Enden untereinander durch ein im wesentlichen V-förmiges zentrales Stück (24) verbunden sind und die jeweils an ihrem zweiten Ende (26) durch ein äußeres gekrümmtes Stück verlängert sind, welches den entsprechenden Arm (22) bildet.

2. Anschlagkörper nach Anspruch 1, dadurch gekennzeichnet, daß das zentrale Stück (24) mit jedem der ersten Enden der seitlichen Montagestücke (23) durch eine Haarnadelkrümmung (25) verbunden ist.

3. Anschlagkörper nach Anspruch 1 oder 2, dadurch gekennzeichnet, daß die seitlichen Montagearme (23) mit ihrem zweiten Ende (26) aufeinander zu konvergieren.

4. Anschlagkörper nach einem der Ansprüche 1 bis 3, dadurch gekennzeichnet, daß jedes armbildende äußere Stück (22) über den zentralen Abschnitt (21) hinaus verlängert ist, wobei die freien Enden dieser Stücke Arme bilden, die aufeinander zu konvergieren.

5. Anschlagkörper nach einem der Ansprüche 1 bis 4, dadurch gekennzeichnet, daß das zentrale Stück (24) eine Konfiguration in Form eines Y hat, dessen Bein von einer U-förmigen länglichen Krümmung (240) gebildet wird.

6. Anschlagkörper nach einem der Ansprüche 1 bis 5, dadurch gekennzeichnet, daß er aus einem Federstahldraht mit einem Durchmesser zwischen 1,3 und 2 mm besteht.

7. Bremsservomotor mit einem in einer Nabe des Servokolbens (1) angeordneten Plunger (4) eines Verteilerventils (3), der mit einer Eingangsstange (5) des Servomotors verbunden ist, und einem Anschlagkörper (20) für den Plunger nach einem der vorhergehenden Ansprüche, der in eine radiale Öffnung (11) der Kolbennabe gegen eine erste axiale Wand (12) dieser Öffnung greift, dadurch gekennzeichnet, daß die radiale Öffnung (11) seitlich zumindest benachbart zum Plunger (4) gegenüberliegende parallele radiale Nuten (13) aufweist, die axial auf einer Seite durch die axiale Wand (12) der Öffnung (11) begrenzt sind und im wesentlichen spielfrei die seitlichen Montagestücke (23) des Abstandskörpers (20) aufnehmen.

8. Servomotor nach Anspruch 5 und 7, dadurch gekennzeichnet, daß die radiale Öffnung (11) einen zentralen Abschnitt und einen vorstehenden Abschnitt (17) aufweist, von denen der zentrale Abschnitt eine axiale Erstreckung hat, die größer ist als die axiale Erstreckung der Nuten (13), und der von einer zweiten axialen Wand begrenzt wird, und von denen der vorstehende Abschnitt (17) sich von dieser axialen Wand bis in die Nähe der ersten axialen Wand (12) axial erstreckt.

9. Servomotor nach Anspruch 8, dadurch gekennzeichnet, daß der vorstehende Abschnitt (17) die beiden axialen Wände der Öffnung (11) verbindet und einstückig mit der Nabe (1) ausgebildet ist.

10. Servomotor nach einem der Ansprüche 7 bis 9, dadurch gekennzeichnet, daß der quer verlaufende Abstand (d) zwischen den einander zugewandten Nutgründen der Nuten (13) im wesentlichen gleich dem Abstand zwischen den parallelen Außenrändern der seitlichen Montagestücke (23) ist.

11. Servomotor nach einem der Ansprüche 7 bis 10, dadurch gekennzeichnet, daß die Nabe (1) eine Umfangsnut (16) aufweist, die die armbildenden äußeren Stücke (22) des Anschlagkörpers (20) aufnimmt.

**Claims**

1. Abutment key for a plunger (4) of a distribution valve (3) of a brake servo motor disposed in a hub portion (1) of a servo piston of the servo motor, the key (20) comprising a central portion (1) having an end of a substantially V-shaped profile, adapted to be engaged in a radial opening (11) of the hub portion for cooperating with the plunger (4) and a pair of arms (22) substantially in the form of a circular arc, which pair of arms is formed integrally with the central portion (21) and is adapted to cooperate with the external periphery of the hub portion, characterized in that the key (20) is comprised of a metallic wire, the central portion (21) comprising two substantially parallel lateral mounting pieces (23) having their first ends connected to each other by a substantially V-shaped central piece (24) and each having its second end (26) prolongated by a curved external piece forming the corresponding arm (22).

2. Key according to claim 1, characterized in that the central piece (24) is connected to each of the first ends of the lateral pieces (23) by a hair needle bend (25).

3. Key according to claim 1 or claim 2, characterized in that the lateral pieces (23) have their second ends (26) converge towards each other.

4. Key according to any of claims 1 to 3, characterized in that each external piece forming an arm (22) extends beyond the central portion (21), the free ends of these pieces forming arms converging towards each other.

5. Key according to any of claims 1 to 4, characterized in that the central piece (24) has a configuration in the form of an Y having its leg formed by an elongated U-bend (240).

6. Key according to any of claims 1 to 5, characterized in that it is comprised of a spring steel wire having a diameter between 1,3 and 2 mm.

7. Brake servo motor comprising, in a servo piston hub (1), a plunger (4) of a distribution valve (3) coupled to an input rod (5) of the servo motor, and an abutment key (20) for the plunger according to any of the preceding claims, engaged in a radial opening (11) of the piston hub between a first axial wall (12) of said opening, characterized in that the radial opening (11) laterally comprises, at least adjacent to the plunger (4), opposite parallel radial grooves (13) axially delimited on one side by said axial wall (12) of the opening (11) and receiving, substantially without play, the lateral mounting pieces (23) of the key (20).

8. Servo motor according to claim 5 and claim 7, characterized in that the radial opening (11) comprises a central portion having an axial extension greater than the axial extension of the grooves (13) and delimited by a second axial wall, and a projecting portion (17) extending axially from said second axial wall adjacent to the first axial wall (12).

9. Servo motor according to claim 8, characterized in that the projecting portion (17) connects the two axial walls of the opening (11) and is formed integrally with the hub (1).

10. Servo motor according to any of claims 7 to 9, characterized in that the transverse distance (d) between the bottoms opposite the grooves (13) is substantially equal to the distance between the parallel external edges of the lateral pieces (23).

11. Servo motor according to any of claims 7 to 10, characterized in that the hub (1) comprises a peripheral groove (16) receiving the external arms forming pieces (22) of the key (20).

FIG -1

FIG -2

FIG-3b    FIG-3a